# EUROPEAN PATENT APPLICATION

(11) **EP 2 312 473 A1**
(43) Date of publication of application: **20.04.2011**
(21) Application number: 10187570.6
(22) Date of filing: 14.10.2010
(51) Int. Cl.: G06F 17/30, G06F 17/21, G06F 17/22

(54) **System, apparatus and method for processing content on a computing device**

(30) Priority: 14.10.2009 US 251544 P
(71) Applicant: Research In Motion Limited, Waterloo, ON N2L 3W8 (CA)
(72) Inventor: White, Shannon, Ralph, Normand, Waterloo Ontario N2K 3R2 (CA)
(74) Representative: MERH-IP Matias Erny Reichl Hoffmann

(57) **Abstract**

A system, apparatus and method for processing content on a computing device is provided whereby, in one embodiment, a domain object model and associated style sheet are received at a computing device The computing device is configured to parse the domain object model and determine styles from the style sheet and to store those styles in an interim storage for later use.

## Description

### FIELD

The present specification relates generally to networked computing and more specifically relates to a system, apparatus and method for processing content on a computing device.

### BACKGROUND

Mobile computing devices are increasingly being used to access content hosted on the Internet or other type of network. Such content can be rich, putting strains on the limited computing resources of the mobile computing device.

### BRIEF DESCRIPTION OF THE DRAWINGS

Figure 1 shows a schematic representation of a system for processing content on a computing device.

Figure 2 shows a schematic representation of the computing device shown in the system of Figure 1.

Figure 3 shows a flow-chart depicting a method of processing content on the computing device of Figure 1.

Figure 4 shows a variation of the method in Figure 3.

Figure 5 shows an example tree structure of a web page.

### SUMMARY

An aspect of this specification provides a method for processing content on a computing device comprising: receiving a domain object model of the content; receiving a style sheet respective to the domain object model; parsing the domain object model; identifying a style within the domain object model at a location within the domain object model; copying the style from the style sheet into an interim storage if the style is not located in the interim storage; and repeating the identifying and copying for another location in the domain object model.

The method can further comprise creating a temporary identifier corresponding to each style as identified within the interim storage.

The temporary identifier can comprise a style number corresponding to the style. The temporary identifier can comprise a first hash of the style

The method can further comprise setting an index in the content to an initial location determined from the parsing

The temporary identifier can comprise the location corresponding to the index.

The copying the style from the style sheet can include copying the style from the style sheet into the interim storage using the temporary identifier.

The style is not located in the interim storage if the first hash does not match any hash in the interim storage or if the style does not match a style corresponding to a second location corresponding to a second hash in the interim storage that matches the first hash.

The method can comprise advancing the index to a next location, if the style is located in the interim storage or after the copying the style from the style sheet into the interim storage.

The domain object model is a hyper text markup language document. The style sheet can be a Cascading Style Sheet.

Another aspect of this specification provides a computing device comprising a processor configured to: receive a domain object model of a content from at least one server connectable with the computing device via a network; receive a style sheet respective to the domain object model from the at least one server; parse the domain object model; identify a style within the domain object model at a location within the domain object model; copy the style from the style sheet into an interim storage if the style is not located in the interim storage; and repeat the identify and copy for another location in the domain object model.

Another aspect of this specification provides computer program product, for a computing device, comprising a computer readable storage medium having a computer-readable program code adapted to be executable on the computing device to implement a method for processing content for generation on the computing device, the method comprising:: receiving a domain object model of the content from at least one server connected to the computing device via a network; receiving a style sheet respective to the domain object model from the at least one server; at the computing device, parsing the domain object model; at the computing device, identifying a style within the domain object model at a location within the domain object model; at the computing device, copying the style from the style sheet into an interim storage if the style is not located in the interim storage; and repeating the identifying and copying for another location in the domain object model.

Another aspect of this specification provides a method of processing content on a server comprising: receiving a domain object model of the content; receiving a style sheet respective to the domain object model; parsing the domain object model; identifying a style within the domain object model at a location within the domain object model; copying the style from the style sheet into an interim storage if the style is not located in the interim storage; and repeating the identifying and copying for another location in the domain object model.

Another aspect of this specification provides a server comprising a central processing unit configured to: receive a domain object model of a content from at least one other server connectable with the computing device via a network; receive a style sheet respective to the domain object model from the at least one other server; parse the domain object model; identify a style within the domain object model at a location within the domain object model; copy the style from the style sheet into an interim storage if the style is not located in the interim storage; and repeat the identify and copy for another location in the domain object model.

### DETAILED DESCRIPTION OF THE EMBODIMENTS

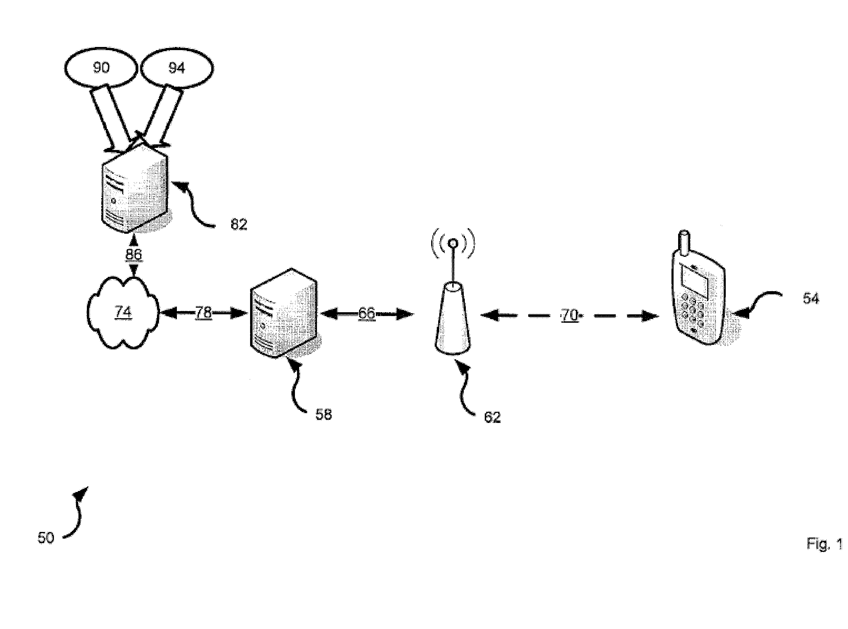

Referring now to Figure 1, there is shown a system 50 for processing content for generation on a computing device. In a present embodiment system 50 comprises a mobile computing device 54 and at least one intermediation server 58. A wireless base station 62 interconnects computing device 54 and intermediation server 58 A backhaul link 66 interconnects base station 62 with intermediation server 58. At least one bearer path 70, typically wireless, can be used to interconnect base station 62 with computing device 54. In a present exemplary embodiment, bearer path 70 can be based on one or more of Global System for Mobile communications (GSM), General Packet Radio Service (GPRS), Enhanced Data Rates for GSM Evolution (EDGE), the Third-generation mobile communication system (3G), Evolution-Data Optimized (EVDO), Institute of Electrical and Electronic Engineers (IEEE) 802.11 (WiFi) or other wireless protocols. In variations, path 70 can be wired.

Intermediation server 58 is also connected to a network 74 via another backhaul link 78. Network 74 can be any type of network that can deliver content to device 54. In a present embodiment, network 74 is the Internet and connects to a server 82 which connects to network 74 by another backhaul link 86. In a present embodiment, server 82 hosts content in the form of a document object model (DOM) such as a web page 90 based on the hyper text markup language (HTML). Server 82 also hosts a style sheet 94 that can be used to generate web page 90. Note that in a present embodiment, style sheet 94 is stored on server 82, but it should be understood that style sheet 94 can be stored elsewhere on network 74. Style sheet 94 can be based on any style sheet language such as Cascading Style Sheets (CSS).

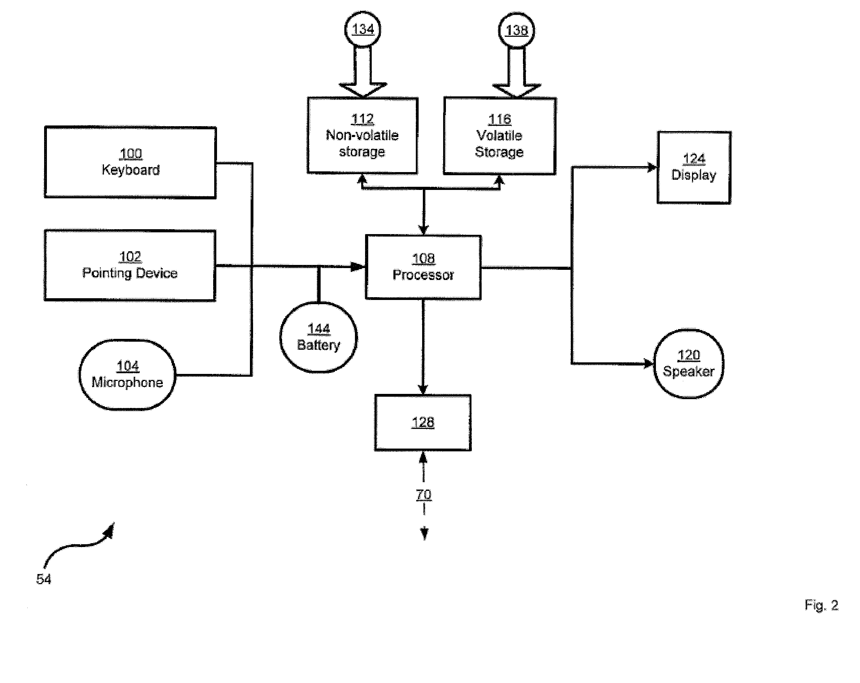

Referring now to Figure 2, computing device 54 can be any type of computing device that can be used in a self-contained manner and to interact with content available over network 74. Interaction includes displaying of information on computing device 54 as well as to receive input at computing device 54 that can in turn be sent back over network 74. It should be emphasized that the structure in Figure 2 is purely exemplary, and contemplates a device that be used for both wireless voice (e.g telephony) and wireless data (e.g. email, web browsing, text) communications. In a present embodiment, computing device 54 is a mobile computing device with the combined functionality of a personal digital assistant, a cell phone, and an email paging device. (Although variants of device 54 can include a palm top computer or laptop computer with a reduced screen such as an ASUS EEE from ASUSTek Computer Inc. of Taiwan). Many known cellular telephone models, or variants thereof, are suitable for the present embodiment

Device 54 thus includes a plurality of input devices which in a present embodiment includes a keyboard 100, a pointing device 102, and a microphone 104. Pointing device 102 can be implemented as a track wheel, trackball or the like. Other input devices, such as a touch screen are also contemplated. Input from keyboard 100, pointing device 102 and microphone 104 is received at a processor 108. Processor 108 is configured to communicate with a non-volatile storage unit 112 (e.g. Erasable Electronic Programmable Read Only Memory ("EEPROM"), Flash Memory) and a volatile storage unit 116 (e.g. random access memory ("RAM")) Programming instructions that implement the functional teachings of device 54 as described herein are typically maintained, persistently, in non-volatile storage unit 112 and used by processor 108 which makes appropriate utilization of volatile storage 116 during the execution of such programming instructions. It should be understood that non-volatile storage unit 112 and volatile storage unit 116 are non-limiting examples of computer readable media which can store programming instructions that are executable on processor 108. Such computer readable media can also comprise removable non-volatile storage, though not shown in Figure 2.

Processor 108 in turn is also configured to control a speaker 120 and a display 124. Processor 108 also contains at least one network interface 128, which are implemented in a present embodiment as radios configured to communicate over bearer path 70. In general, it will be understood that interface(s) 128 is (are) configured to correspond with the network architecture that defines a particular bearer path 70. It should be understood that in general a wide variety of configurations for device 54 are contemplated.

In a present embodiment, device 54 is also configured to maintain a content generation application in the form of a browser application 134 maintained within non-volatile storage 112. Browser application 134 is configured to receive web page 90 and style sheet 94 and to use style sheet 94 to process web page 90 and to accordingly generate or render web page 90 on display 124, as will be discussed further below.

Processor 108 is configured to execute browser application 134, and is also configured to receive input from keyboard 100 relative to browser application 134 and to generate graphical interfaces on display 124 corresponding to web pages received over network 74 such as web page 90, as will be discussed further below.

Device 54 also includes a battery 144 or other power supply. Battery 144 provides power to components within device 54.

Intermediation server 58 can be based on any well-known server environment including a module that houses one or more central processing units, volatile memory (e.g. random access memory), persistent memory (e.g. hard disk devices) and network interfaces to allow intermediation server 58 to communicate over network 74 and with base station 62. For example, intermediation server 58 can be a Sun Fire V480 from Sun Microsystems, Inc of Palo Alto Calif., running a UNIX operating system, and having four central processing units each operating at about nine-hundred megahertz and having about sixteen gigabytes of random access memory. However, it is to be emphasized that this particular server is merely exemplary, and a vast array of other types of computing environments for intermediation server 58 is contemplated.

Intermediation server 58 is configured to carry traffic between network 74 and device 54. While a BlackBerry^{™} computing environment is not required to implement the present teachings, where a BIackBerry^{™} computing environment is used to implement system 50, then intermediation server 58 can be implemented as a "Relay" server that is specific to a BlackBerry^{™} computing environment However, as will be discussed further below, the present teachings are applicable to other computing environments, including environments where an intermediation server 58 is not required, and instead a direct connection between device 54 and network 74 is employed.

Server 82 can be based on the same or different computing environment as intermediation server 58. In general, however, server 82 is a web server configured to host content such as web page 90 and an associated style sheet 94.

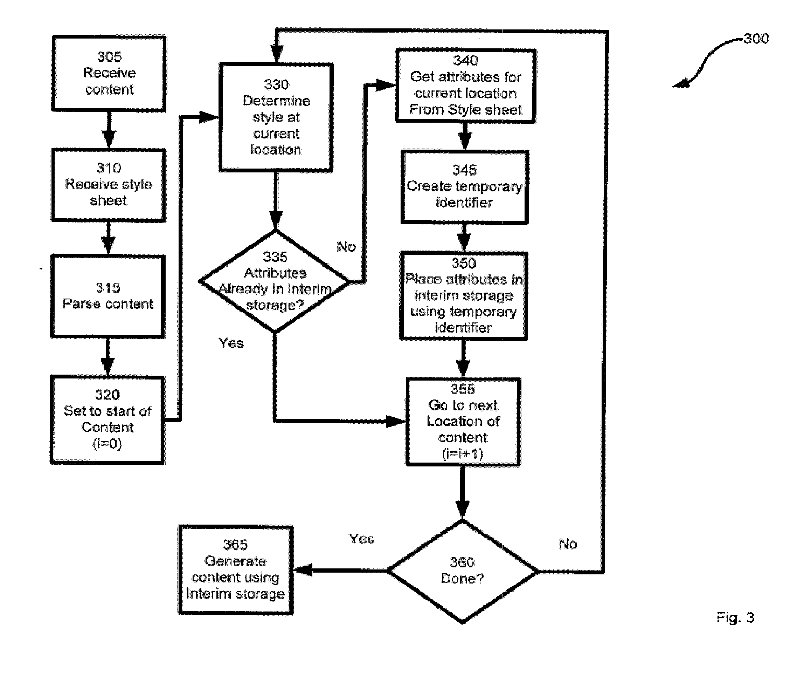

Referring now to Figure 3, a flowchart depicting a method for processing content for generation on a computing device is indicated generally at 300 Method 300 can be implemented on system 50 or a suitable variation thereof

Block 305 comprises receiving content In a present embodiment, block 305 is implemented by device 54 which receives web page 90 from server 82 via network 74 Once received, web page 90 is stored in volatile storage 116. Web page 90 contains references to certain styles which are maintained within style sheet 94. To illustrate such references, Table I shows a simplified non-limiting example to help conceptualize web page 90. It should be understood that Table I is not expressed using actual HTML, but is instead expressed in pseudo-code for the purpose of explanation.

**TABLE I**

| Example contents of Web-page 90 |
|---|
| ... |
| <Begin Using Style 1379> Hello World <Stop Using Style 1379> |
| <Begin Using Style 1622> Hello Solar System <Stop Using Style 1622> |
| <Begin Using Style 1379> Hello Universe <Stop Using Style 1379> |
| ... |

Discussing Table I in more detail, this example of web-page 90 shows three lines of text. The first line generates the text "Hello World". The second line generates the text "Hello Solar System". The third line generates the text "Hello Universe". Those skilled in the art will now recognize that device 54 may experience a burden on its processing, display and storage resources in the actual generation of web-page 90, due to the fact that all three lines make reference to styles that are maintained within style sheet 94, and the exact attributes of those styles are only ascertainable by examining style sheet 94. Indeed, web-page 90 also specifies that the text "Hello World" and the text "Hello Universe" are to be generated using style number 1379; while web-page 90 also specifies that the text "Hello Solar System" is to be generated using style number 1622

Block 310 comprises receiving a style sheet that contains styles corresponding to those referenced in the web page received at block 305. In the present embodiment, block 310 is also implemented by device 54, which receives style sheet 94 from server 82 via network 74. Therefore, in order to generate web page 90 on display 124, it will be typical to access style sheet 94 to ascertain the styles to be used to generate web page 90 on display 124. To illustrate a style sheet, Table II shows a simplified non-limiting example to help conceptualize style sheet 94. It should be understood that Table II is not expressed using actual CSS or any other known style sheet language, but is instead expressed in pseudo-code for the purpose of explanation.

**TABLE II**

| Example contents of Style Sheet 94 | |
|---|---|
| Style Number | Attributes |
| 1 | {color: white; background: orange; font: arial; fontsize: 10} |
| ... | ... |
| 1379 | {color: black; background: green; font: courier; fontsize: 12} |
| ... | ... |
| 1622 | {color: purple; background brown; font: times; fontsize: 14} |
| ... | ... |
| 2000 | {color: green; background red; font Helvetica; fontsize 22} |
| ... | ... |

Discussing Table II in more detail, this example of style sheet 94 shows that over two-thousand different styles are stored within style sheet 94. Note that there is no lower or upper limit of numbers of styles that need be stored in style sheet 94, even though in the present example over two-thousand are contemplated. Table II shows four examples of specific styles. Style Number 1 specifies that text generated according to Style Number 1 will be in a white font on an orange background using a ten point arial font. Style Numbers 2-1378 are not shown. Style number 1379 specifies that text generated according to Style Number 1379 will be in a black font on a green background using a twelve point courier font. Style Numbers 1380-1621 are not shown. Style number 1622 specifies that text generated according to Style Number 1622 will be in a purple font on a brown background using a fourteen point times font Style Numbers 1623-1999 are not shown. Style number 2000 specifies that text generated according to Style Number 2000 will be in a green font on a red background using a twenty-two point Helvetica font. Style numbers 2000 and onwards are not shown.

Complicating the actual generation of web-page 90, however, is the fact that all three lines make reference to different styles that are maintained within style sheet 94, and the exact attributes of those styles are only ascertainable by examining style sheet 94. Indeed, web-page 90 also specifies that the text "Hello World" and the text "Hello Universe" are to be generated using style number 1379; while web-page 90 also specifies that the text "Hello Solar System" is to be generated using style number 1622. Those skilled in the art will now recognize that device 54 may experience a burden on its processing, display and storage resources in the actual generation of web-page 90, due to the fact that over two thousand styles will be searched in order to find a particular set of attributes for a style identified in web-page 90.

Block 315 comprises parsing the content received at block 305. Block 315 is performed on device 54, and can involve any logical means of dividing web page 90 into discrete chunks. Thus, block 315 examines web page 90 and divides it into such chunks for further processing using method 300. Table III shows web page 90 parsed into three lines each having their own location

**Table III**

| Web page 90 parsed according to Block 315 | |
|---|---|
| Location | Content |
| 0 | <Begin Using Style 1379> Hello World <Stop Using Style 1379> |
| 1 | <Begin Using Style 1622> Hello Solar System <Stop Using Style 1622> |
| 2 | <Begin Using Style 1379> Hello Universe <Stop Using Style 1379> |

Again, it is to be noted that web page 90 from Table I is simplified, and so the result of parsing in Table III is likewise simplified. However, more complex parsing techniques are contemplated. For more complex or lengthy web pages or DOMs, as one non-limiting example it is contemplated that block 315 can comprise using a tree structure and assign one or more nodes to all lines of code within the DOM. Each node in the tree would typically include its own unique reference to the commencement of use or cessation of use (or both) of a particular style that is maintained within style sheet 94. Such a tree can then be traversed according to the remainder of method 300.

Block 320 comprises setting a pointer to the start of the content. Such a pointer is referred to in Figure 3 using the variable "i", where i=0. Continuing with the specific example, as a result of block 320 the pointer is set to location zero of Table III.

Block 330 comprises examining the content at the current location. Block 330 comprises examining the content to extract or identify references to particular styles that are maintained within style sheet 94. Using the example in Table III, at location zero of Table III Style number 1379 is extracted.

Block 335 comprises determining whether the attributes associated with the style identified at block 330 are already maintained within an interim storage location. In this first pass through method 300, it can be noted that no interim storage location may exist, and so during this first pass a "no" determination can be made at block 335.

Block 340 comprises retrieving the attributes for the current location from the style sheet 94. Continuing with the present example, at block 340 style sheet 94 is examined (e.g. searched) for information relating to the style that was determined at block 330. In this example, since style number 1379 was extracted at block 330, then the attributes for style number 1379 from Table II -- { color: black; background: green; font: courier; fontsize: 12}are retrieved from style sheet 94.

Block 345 comprises creating a temporary identifier. A simple means for generating a temporary identifier comprises creating an index that corresponds to the style number from style sheet 94 Other means of generating temporary identifier will be discussed further below.

Block 350 comprises placing the attributes retrieved at block 340 into an interim storage using the temporary identifier generated at block 345. At this point brief reference can be made back to Figure 2, which shows an interim storage area 138 within volatile storage 116 of device 54. Interim storage area 138 can be created by processor 108 as a result of performing block 305. Table IV shows an example of interim storage area 138.

**TABLE IV**

| Example contents of Interim storage area 138 (after first performance of block 350) | |
|---|---|
| TemporaryIdentifier | Attributes |
| Style Number 1379 | {color: black; background: green; font: courier; fontsize: 12} |

Block 355 comprises advancing to the next location of the content. In the present example, block 355 comprises advancing from Location 0 in Table III to Location 1 in Table III.

Block 360 comprises determining whether, as a result of the advancing at block 355, there are any further locations in the content to be examined. In other words block 360 comprises ascertaining whether the end of the file has been reached. If "no", then method 300 returns to block 330 In the present example, the end of the file has not been reached, and so a "no" determination is made and method 300 cycles back to block 330.

During this pass of block 330, at Location 1 style number 1622 is extracted At block 335, an examination of interim storage 138 is made to ascertain whether the attributes corresponding to style number 1622 are already stored in the interim storage 138 In this example, a "No" determination is made again at block 335, and method 300 cycles through blocks 340-350 again. As a result of such cycling, at block 350 Table IV is updated so as to include the attributes for style number 1622, as shown in Table V

**TABLE V**

| Example contents of Interim storage area 138 (after second performance of block 350) | |
|---|---|
| Temporary Identifier | Attributes |
| Style Number 1379 | { color: black; background: green; font:: courier; fontsize: 12} |
| Style Number 1622 | { color: purple; background: brown; font: times; fontsize: 14} |

Block 335 comprises advancing to the next location of the content. In the present example, block 335 comprises advancing from Location 1 in Table III to Location 2 in Table III.

Block 360 comprises determining whether, as a result of the advancing at block 355, there are any further locations in the content to be examined. Again, in the present example, the end of the file has not been reached, and so a "no" determination is made and method 300 cycles back to block 330.

During this pass of block 330, at Location 2 style number 1379 is extracted. During this pass of block 335, however, a "yes" determination will be made, because an examination of interim storage area 138 reveals that attributes for style number 1379 are already stored in the interim storage area 138. Such a "yes" determination advances the method directly to block 355 where the location is advanced again. Now, during this pass of block 360, a "yes" determination will be made because there are no further locations to examine in Table III. At this point method 300 advances to block 365 which comprises generating the content of web page 90 on display 124 using the contents of interim storage area 138.

At this point it is to be reemphasized that method 300 need not be performed in the exact sequence of steps shown. Variations to such ordering, and to various blocks themselves, are contemplated. For example, it is contemplated that the generation of web page 90 on display 124 need not be performed after block 360 Rather, each line of web page 90 can be generated as the particular style is extracted, either using the style directly from the style sheet 94, or from the interim storage area 138 if the interim storage area 138 already contains the relevant style.

Another example of a variation involves block 345, whereby instead of using the Style Number itself as the temporary identifier, a hash of one or more of the tags that identify the style number is used. For clarity, in Table III an example of a tag includes the string "<Begin Using Style 1379>" or the string "<Stop Using Style 1379>". Block 345 can thus comprise using a hashing operation on one or both of text strings to generate a number that is then used as the temporary identifier. Where such hashing is used to generate the temporary identifier, then likewise a hash of the tag is used at block 335 to ascertain whether or not a particular style has already been stored within interim storage area 138. Table VI shows an example of interim storage area 138 using this variation

**TABLE VI**

| Example contents of Interim storage area 138 (after second performance of block 350 using hashing operation to generate unique identifier) | |
|---|---|
| Temporary Identifier (Hash of Style Number) | Attributes |
| 111001 (Hash of Style Number 1379) | {color: black; background: green; font: courier; fontsize: 12} |
| 100011 (Hash of Style Number 1622) | {color: purple; background:: brown; font: times; fontsize: 14} |

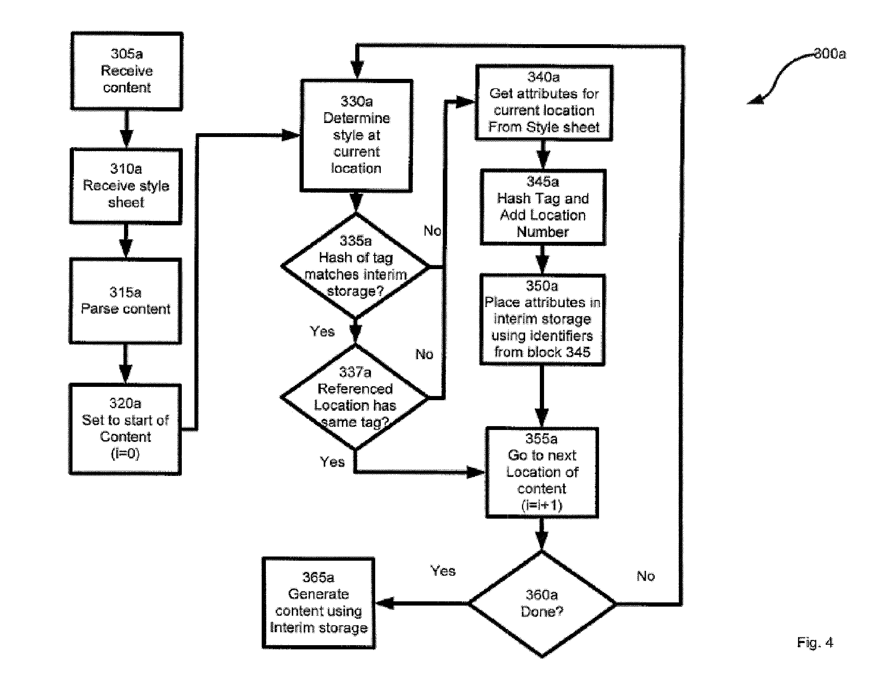

In the event that particular hashing operation runs the risk that two different styles could be hashed into the same number, then a further identifier can be added to the hashed tag. A non-limiting example of this variation is illustrated in Figure 4 as method 300a. Method 300a is similar to method 300, and like blocks bear like references except followed by the suffix "a". Of note is that in the creation of the temporary identifier at block 345, a further identifier in the form of the original location number itself is added to the hash of the tag. The resulting temporary identifier can then comprise "Hash of Tag":"Location Number".

Table VII shows an example of interim storage area 138 using this variation.

**TABLE VI**

| Example contents of Interim storage area 138 (after second performance of block 350 using hashing operation to generate unique identifier) | |
|---|---|
| Temporary Identifier (Hash of Style Number):(Location) | Attributes |
| 111001:0 (Hash of Style Number 1379):(Location 0) | {color: black; background:: green; font: courier; fontsize: 12} |
| 100011:1 (Hash of Style Number 1622):(Location 1) | {color: purple; background:: brown; font: times; fontsize: 14} |

In this variation, block 335 is implemented as two blocks: block 335a and block 337a. At block 335a, if the hashed tag does not match any number in the temporary storage area 138, then a "no" determination is automatically made. However, if a match at block 335a (such as when Location 2 is being examined) is found in the temporary storage area 138, then a "yes" determination is made and method 300a advances to block 337a. At block 337a, the Location Number is used to refer back to the earlier location in the web page 90, so that an examination can be made to ascertain whether or not the tags in those locations are actually the same. If the tags are the same then a "yes" determination is made at block 335. Such a "yes" determination would be made in the example given in relation to Table III, because an examination back to Location 0 would reveal that the tag at Location 0 is the same as the tag at Location 2. But if the tags are different, (because the hashing operation happened to generate the same result on different tags) then a "no" determination is made.

Other variations, subsets, and combinations of the foregoing are contemplated. For example, while method 300 and 300a have been discussed as being performed on device 54, it is contemplated that method 300 or method 300a, or portions thereof, can be performed on intermediation server 58 on behalf of device 54. For example, blocks 305-360 could be performed on intermediation server 58, block 365 could be performed on device 54. In this example, intermediation server 58 is configured to send the interim storage to device 54, so that device 54 need only receive and examine a simplified style sheet, that removes extraneous styles only contains the exact styles needed to generate web page 90 on display 124.

It is also to be reiterated that Table I and Table II are simplified Indeed, those skilled in the art will recognize that a style sheet (such as style sheet 94) implemented in CSS can comprise a plurality of rules, whereby each rule includes a set of selectors and a declaration block, and where each declaration block comprises a set of declarations. In turn, each declaration consists of property name and a value. Table VII shows a somewhat more complex example of a style sheet, although the contents of Table VII are still simplified in relation to an actual style sheet using CSS

**TABLE VII**

| More complex example contents of a Style Sheet | | |
|---|---|---|
| Style Number | Selectors | Declarations (including Attributes) |
| 2001 | p | {color: black; font: courier} |
| 2002 | div p | {color: red; font: courier; fontsize: 14} |
| 2003 | div div p, table p | {font: courier; fontsize: 12} |

The sheet in Table VII has three declarations. The declaration for style number 2001 has a single selector, p. The declaration for style number 2002 also has a single selector, div p. The declaration for the last style has two selectors div div p and table p. Each declaration has a declaration block consisting of 3 declarations Declarations include property name-value pairs for each attribute; E.g. -- "color"-"black", "font"-courier", "fontsize"-"12".

To simplify the discussion, hereafter declarations are continued to be referred to as styles. Thus, while Tables I and II contemplate a single style corresponding to a single location in web page 90, there are typically a plurality of styles from a style sheet that match a particular location in a web page 90. Where a plurality of styles are indicated, then a prioritization can be applied to choose which of the styles will take precedence if the attributes are contradictory. Thus, assume that style number 2001 and style number 2002 are chosen, and style number 2001 is given precedence, then the resulting attributes will be color:black; font: courier from style number 2001, but fontsize:14 will be taken from style number 2002 since no font size was actually identified within style number 2001 Similar types of results can occur from the combinations of the other styles.

Table VIII shows an example of a more complex web page 90, where multiple styles are indicated

**TABLE VIII**

| More complex example contents of Web page 90 |
|---|
| ... |
| <Begin Using Styles 2001 and 2002> Hello World <Stop Using Styles 2001 and 2002> |
| <Begin Using Styles 2001 and 2003> Hello Solar System <Stop Using Styles 2001 and 2003> |
| <Begin Using Styles 2002 and 2003> Hello Universe <Stop Using Styles 2002 and 2003> |
| ... |

Accordingly, method 300 or 300a can be modified to accommodate the web page shown in Table VIII in conjunction with the styles shown in Table VII. In this variation, the temporary identifier generated at block 345 can refer to the group of styles that is referenced by the particular location in web page 90. Such a temporary identification can be based on a hash of all or part of the string "Styles 2001 and 2002" or the like. One example of a hashing operation that can be used is using the exclusive-or ("XOR") of the rule indices, in this case 2001 XOR 2002.

It is also to be understood that the various blocks in method 300 can be implemented in various ways. For example, in another embodiment block 330 of method 300 can be implemented in a specific manner. According to this embodiment, it can be noted that most CSS rule selectors match nodes based on a name criteria. For example, the selector matches nodes (i.e. locations as expressed when web page 90 is placed into a tree structure) having a particular tag name, or having a particular id, or having a particular class. For those CSS rules that have a name, a particular nomenclature can be defined whereby a given selector i can be assigned the name Ni. For example, according to this nomenclature, for selector identified as style 1329 in Table I, the CSS rule will have the name N1329.

Accordingly, at block 310, where the style sheet is received, the source for that style sheet can be stored in some internal memory within device 54 (e.g storage 112 or storage 116) or storage within intermediation server 58 depending on which of device 54 or intermediation server 58 is performing method 310. For purposes of discussion, the internal memory where the style sheet is stored is referred to hereafter as "SSM".

Each CSS rule in SSM can be assigned a unique handle, such that rule i in SSM is assigned unique handle Ri derived from the location of that rule in SSM.

SSM can act not only as a source for style sheet, but also as a dictionary for all the names Ni as defined above. For each unique name Ni in SSM, a unique handle Ui can be assigned that is derived as a location of Ni in SSM.

A lookup table, called LT, is constructed in temporary memory (in a memory location other than SSM) that maps unique name handles Ui to sets of unique rule handles Rj (as described above).

According to this embodiment, parsing at block 315 comprises assigning tree structures of nodes M to identify each location in the web page 90. For each node M traversed in method 300, one or more names N can be associated with a particular node. For example, consider the node M corresponding to the HTML element <p id="myid" class="myclass">. This HTML has names "p", "myid" and "myclass". For each name associated with M, SSM can be used to look-up unique name handlers

If the names associated with M are not found in SSM, then it can be determined that M has no associated named CSS rules.

If U is a unique name in SSM that was found using node M, then lookup table LT can be used to find the set of rules Rj matching nodes M.

The derived set of rules Rj can be used in block 335.

Referring back to the initial discussion of block 315, it can be noted that block 315 can implement parsing by creating a tree structure. Table IX shows a non-limiting example of a more lengthy version of web page 90 to illustrate this point

**TABLE IX**

| Example of lengthier version of Web page 90 |
|---|
| ... |
| <Begin Using Style 1379> Hello World <Stop Using Style 1379> |
| <Begin Using Style 1622> Hello Solar System <Stop Using Style 1622> |
| <Begin Using Style 1379> Hello Universe <Stop Using Style 1379> |
| <Begin Using Style 1622> Hello New York <Stop Using Style 1622> |
| <Begin Using Style 1622> Hello Toronto <Stop Using Style 1622> |
| <Begin Using Style 1622> Hello Helsinki <Stop Using Style 1622> |
| |
| ... |

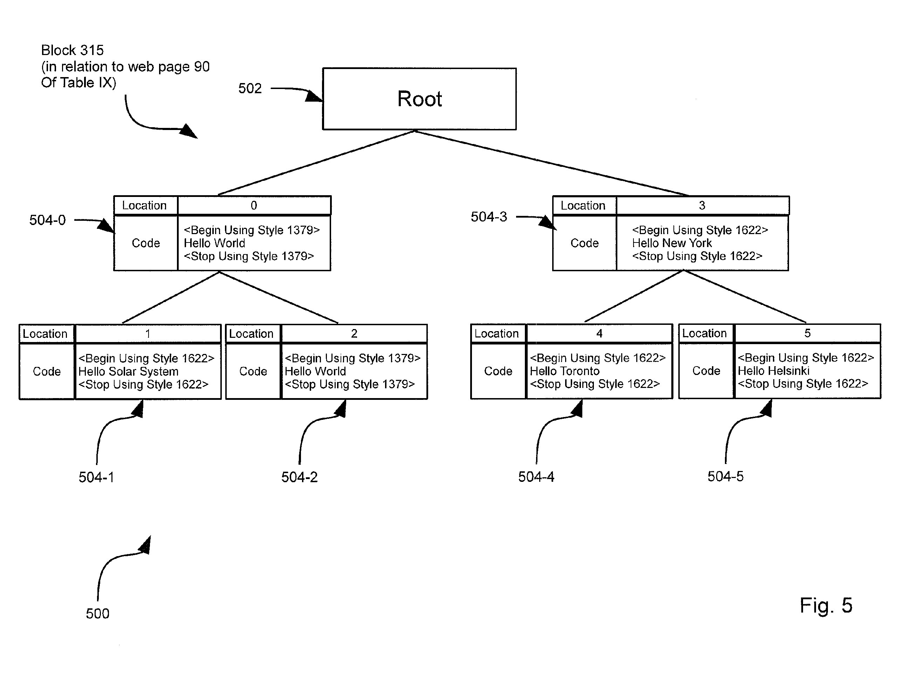

Note that the first three lines of web page 90 in Table IX are the same as web page 90 from Table I, but that three additional lines also included. When web page 90 of Table IX is parsed according to block 315, a tree 500 as shown in Figure 5 can be created. Tree 500 is a binary tree comprising a root node 502 and six child nodes 504-0, 504-1, 504-2, 504-3, 504-4, 504-5. (Collectively, child nodes 504, and generically, child node 504).

The binary tree format of tree 500 can facilitate rapid traversal thereof in order to rapidly locate various locations. Accordingly, once table 500 has been created, then rapid traversal of web page 90 is enabled during performance of block 330 through block 360, or block 365.

It should also now be understood that more complex versions of tree 500 can be created for the other examples discussed herein, including the examples discussed in relation to Table IV, Table V, Table VI, Table VII, Table VIII and method 300a.

It should also now be reiterated that the location identifiers ("0", "1 ", etc.) may also be more complex locations schemes. Again, as noted above, assigning a tree structure to M nodes can be performed to identify each location in the web page 90. For each node M traversed in method 300, one or more names N can be associated with a particular node. For example, consider the node M corresponding to the HTML element <p id="myid" class="myclass">. This HTML has names "p", "myid" and "myclass". For each name associated with M, SSM can be used to look-up unique name handles.

Various advantages arise from the teachings herein. One advantage is that repeated look-ups to a lengthy style sheet can be reduced, thereby increasing the speed by which a particular web page is generated on a display.

## Claims

1. A method of processing content on a computing device comprising:
receiving a domain object model of the content;
receiving a style sheet respective to said domain object model;
parsing said domain object model;
identifying a style within said domain object model at a location within said domain
object model;
copying said style from said style sheet into an interim storage if said style is not
located in said interim storage; and
repeating said identifying and copying for another location in said domain object
model.

2. The method of claim 1, further comprising creating a temporary identifier corresponding to each style as identified within said interim storage.

3. The method of claim 2, wherein said temporary identifier comprises a style number corresponding to said style.

4. The method of claim 2, wherein said temporary identifier comprises a first hash of said style.

5. The method of claim 4, further comprising setting an index in said content to an initial location determined from said parsing, wherein said temporary identifier comprises said location corresponding to said index.

6. The method of claim 5, wherein said copying said style from said style sheet includes copying said style from said style sheet into said interim storage using said temporary identifier

7. The method of claim 6, wherein said style is not located in said interim storage if said first hash does not match any hash in said interim storage or if said style does not match a style corresponding to a second location corresponding to a second hash in said interim storage that matches said first hash.

8. The method of claim 5-7 comprising advancing said index to a next location, if said style is located in said interim storage or after said copying said style from said style sheet into said interim storage.

9. The method of claim 1-8, wherein said domain object model is a hyper text markup language document.

10. The method of claim 1-9 wherein said style sheet is a Cascading Style Sheet.

11. A computing device comprising a processor configured to implement the steps of the method of claims 1 to 10.

12. The computing device of claim 11, wherein said processor is further configured to create a temporary identifier corresponding to each style as identified within said interim storage.

13. A computer program product, for a computing device, comprising a computer readable storage medium having a computer-readable program code adapted to be executable on the computing device to implement a method for processing content for generation on the computing device, the method comprising steps of claims 1 to 10.

14. A method of processing content on a server comprising:
receiving a domain object model of the content;
receiving a style sheet respective to said domain object model;
parsing said domain object model;
identifying a style within said domain object model at a location within said domain
object model;
copying said style from said style sheet into an interim storage if said style is not
located in said interim storage; and
repeating said identifying and copying for another location in said domain object
model.

15. A server comprising a central processing unit configured to:
receive a domain object model of a content from at least one other server
connectable with said computing device via a network;
receive a style sheet respective to said domain object model from said at least one
other server;
parse said domain object model;
identify a style within said domain object model at a location within said domain object
model;
copy said style from said style sheet into an interim storage if said style is not located
in said interim storage; and
repeat said identify and copy for another location in said domain object model.
